# EUROPÄISCHE PATENTSCHRIFT

(11) **EP 1 920 167 B1**
(45) Veröffentlichungstag und Bekanntmachung des Hinweises auf die Patenterteilung: **18.01.2012**
(21) Anmeldenummer: 06777891.0
(22) Anmeldetag: 21.07.2006
(51) Int. Cl.: F16D 65/18

(54) **SELBSTVERSTÄRKENDE REIBUNGSBREMSE**
SELF-ENERGIZING FRICTION BRAKE
FREIN A FRICTION AUTO-AMPLIFICATEUR

(30) Priorität: 24.08.2005 DE 102005039909; 01.12.2005 DE 102005057300
(43) Veröffentlichungstag der Anmeldung: 14.05.2008
(73) Patentinhaber: ROBERT BOSCH GMBH, 70442 Stuttgart (DE)
(72) Erfinder: CAO, Chi-Thuan, 70825 Korntal-Muenchingen (DE); HOFMANN, Dirk, 70439 Stuttgart (DE); VOLLERT, Herbert, 71665 Vaihingen/Enz (DE); NAGEL, Willi, 71686 Remseck/Hochdorf (DE); FOITZIK, Bertram, 71636 Ludwigsburg (DE); GOETZELMANN, Bernd, 71063 Sindelfingen (DE); FRICK, Hans, 87487 Wiggensbach (DE)
(86) Internationale Anmeldenummer: PCT/EP2006/064515
(87) Internationale Veröffentlichungsnummer: WO 2007/023051

(56) Entgegenhaltungen:
- EP-A- 0 841 280
- WO-A-03/056204
- WO-A-2005/061920
- GB-A- 945 846

## Beschreibung

Die Erfindung betrifft eine selbst verstärkende Reibungsbremse mit den Merkmalen des Oberbegriffs des Anspruchs 1. Insbesondere ist die Reibungsbremse als Scheibenbremse und vorzugsweise in Bauform einer Teilbelag-Scheibenbremse ausgeführt, auch wenn grundsätzlich andere Bremsenbauformen, wie beispielsweise Trommelbremsen, ebenfalls möglich sind. Der Anschaulichkeit wegen wird die Erfindung anhand einer Teilbelag-Scheibenbremse erläutert werden ohne dadurch andere Bremsenbauformen von der Erfindung auszunehmen. Die erfindungsgemäße Reibungsbremse ist zur Verwendung in Kraftfahrzeugen vorgesehen.

Eine derartige Reibungsbremse ist bekannt aus der WO 03/056 204 A1. Die bekannte Reibungsbremse ist als Teilbelag-Scheibenbremse ausgebildet. Sie weist einen Reibbremsbelag auf, der zum Bremsen mit einer elektromechanischen Betätigungseinrichtung an einen zu bremsenden Bremskörper drückbar ist. Im Falle einer Scheibenbremse ist der Bremskörper eine Bremsscheibe. Die elektromechanische Betätigungseinrichtung der bekannten Reibungsbremse weist einen Elektromotor, ein Untersetzungsgetriebe und ein Schraubgetriebe als Rotations-/Translations-Umsetzungsgetriebe auf. Zum Bremsen ist der Reibbremsbelag mit der Betätigungseinrichtung quer oder in einem Winkel schräg in Drehrichtung zur Bremsscheibe bewegbar und damit an diese drückbar. Der Aufbau der elektromechanischen Betätigungseinrichtung kann vom geschilderten Aufbau abweichen. Auch wenn die erfindungsgemäße Reibungsbremse insbesondere zu einer elektromechanischen Betätigung vorgesehen ist, sind auch andere Betätigungseinrichtungen, beispielsweise hydraulische oder pneumatische Betätigungseinrichtungen, möglich.

Zur Erzielung einer Selbstverstärkung weist die bekannte Reibungsbremse einen Rampenmechanismus mit in einem Winkel zur Bremsscheibe verlaufenden Rampen auf, an denen sich der Reibbremsbelag beim Drücken an die Bremsscheibe abstützt. Wird der Reibbremsbelag beim Bremsen an die drehende Bremsscheibe gedrückt, übt die Bremsscheibe eine Reibungskraft auf den Reibbremsbelag aus, die den Reibbremsbelag in Richtung eines enger werdenden, keilförmigen Spalts zwischen den den Reibbremsbelag abstützenden Rampen und der Bremsscheibe beaufschlagt. Die Abstützung des Reibbremsbelags an den schräg zur Bremsscheibe verlaufenden Rampen des Rampenmechanismus bewirkt eine Kraft auf den Reibbremsbelag mit einer Kraftkomponente quer zur Bremsscheibe. Diese Kraftkomponente quer zur Bremsscheibe ist eine Andruckkraft, die den Reibbremsbelag an die Bremsscheibe drückt. Die vom Rampenmechanismus bewirkte Andruckkraft erhöht eine von der Betätigungseinrichtung ausgeübte Andruckkraft und erhöht damit eine Bremskraft der Reibungsbremse. Die Erhöhung von Andruck- und Bremskraft wird als Selbstverstärkung bezeichnet.

Die Rampen und damit die Bewegungsrichtung des Reibbremsbelags verlaufen in Umfangsrichtung und in einem Winkel schräg zur Bremsscheibe, d. h. sie verlaufen schraubenlinienförmig um eine gedachte Drehachse der Bremsscheibe. Dabei kann sich die Steigung über den Verlauf ändern. So wird beispielsweise durch eine große Steigung zu Beginn der Bewegung des Reibbremsbelags ein Spalt (Lüftspalt) zwischen der Bremsscheibe und dem Reibbremsbelag schnell überwunden und durch eine kleine Steigung am Ende der Bewegung des Reibbremsbelags, d. h. bei großer Bremskraft, wird eine hohe Selbstverstärkung erreicht. Ein Sonder- oder Grenzfall eines Rampenmechanismus ist ein Keilmechanismus, bei dem der Winkel, unter dem die Rampen zur Bremsscheibe verlaufen, über den Verlauf der Rampen konstant ist. Die Rampen werden in diesem Fall als Keile bezeichnet. Die Selbstverstärkung ist über den Verlauf der Rampen und über den Verschiebeweg des Reibbremsbelags konstant.

Die Bewegungsrichtung des Reibbremsbelags muss nicht zwingend schraubenlinienförmig, d. h. mit einer Komponente in Umfangsrichtung und einer Komponente quer zur Bremsscheibe sein, die Bewegungsrichtung kann beispielsweise auch eine Komponente in tangentialer Richtung zur Bremsscheibe aufweisen. Notwendig zur Erzielung der Selbstverstärkung ist, dass die von der drehenden Bremsscheibe auf den zum Bremsen an sie gedrückten Reibbremsbelag ausgeübte Reibungskraft den Reibbremsbelag in den enger werdenden Spalt zwischen den Rampen und der Bremsscheibe beaufschlagt.

Bei der bekannten Reibungsbremse weist der Rampenmechanismus eine Wälzlagerung des Reibbremsbelags mit Rollen auf, die auf den Rampen wälzen. Unter Rollen im Sinne der Erfindung sind zu einer Achse symmetrische Rotationskörper wie Räder, Scheiben, Zylinder- oder Kegelwalzen, Nadeln und dgl. zu verstehen.

Die gattungsbildende WO 2005/061920 A offenbart eine vergleichbare Teilbelag-Scheibenbremse als Reibungsbremse, bei der ein Reibbremsbelag ebenfalls auf einer schraubenlinienförmigen Bahn mit gleicher Achse wie eine Bremsscheibe und in einem spitzen Winkel zur Bremsscheibe auf Rampen geführt ist. Auch hier wälzen Rollen als Wälzkörper auf Rampen eines Widerlagers, wobei im Unterschied zur vorstehend erläuterten Reibungsbremse hier die Rollen ortsfest in Lagerböcken auf einer der Bremsscheibe abgewandten Rückseite einer Bremsbetragträgerplatte drehbar gelagert sind.

### Erläuterung und Vorteile der Erfindung

Grundgedanke der Erfindung ist, den Reibbremsbelag über die Rollen des Rampenmechanismus an den Rampen in der vorgesehenen Bewegungsrichtung, insbesondere also auf einer schraubenlinienförmigen Bahn um die Drehachse der Bremsscheibe, zu führen. Zu diesem Zweck weist mindestens eine Rolle des Rampenmechanismus der erfindungsgemäßen Reibungsbremse mit den Merkmalen des Anspruchs 1 einen Führkranz auf. Der Führkranz kann nach Art eines Spurkranz ausgeführt sein, wie er von Rädern von Schienenfahrzeugen bekannt ist. Der

Führkranz steht nach Art eines Radialflansches radial nach außen von einer Lauffläche der Rollen ab. Der Führkranz kann an einer oder beiden Seiten der Lauffläche oder auch in deren Mittelbereich, d. h. zwischen beiden Rändern der Lauffläche der Rolle ausgebildet sein. Weist die Rolle einen Führkranz auf, ist dieser bei einer Ausgestaltung der Erfindung in einer Nut der Rampe geführt oder er befindet sich auf einer Seite der Rampe und führt die Rolle nur in einer Axialrichtung der Rolle. Die Führung in der anderen Axialrichtung erfolgt mit einem Führkranz einer anderen Rolle oder in anderer Weise. Eine andere Ausgestaltung der Erfindung sieht vor, dass die Rolle zwei Führkränze aufweist, die die Rolle an beiden Seiten der Rampe, auf der die Rolle wälzt, führt. Auch dadurch ist eine Führung in beiden Axialrichtungen der Rolle gewährleistet. Vorteil der Erfindung ist die Führung des Reibbremsbelags in seiner vorgesehenen Bewegungsrichtung entlang der Rampen des Rampenmechanismus.

Die Unteransprüche haben vorteilhafte Ausgestaltungen und Weiterbildungen der im Anspruch 1 angegebenen Erfindung zum Gegenstand.

Gegenstand des Anspruchs 4 ist eine Führung des Reibbremsbelags mit exakt zwei Rollen, die in Umfangsrichtung des Bremskörpers voneinander beabstandet sind und die in beiden Axialrichtungen an den Rampen, auf denen sie wälzen, geführt sind. Um die Querkräfte an den Führkränzen klein zu halten, werden vorzugsweise zwei in Umfangsrichtung des Bremskörpers möglichst weit voneinander beabstandete Rollen gewählt. Diese Ausgestaltung der Erfindung erreicht eine statisch bestimmte Führung des Reibbremsbelags.

Zu einer statisch bestimmten Abstützung des Reibbremsbelags sieht Anspruch 8 eine Wälzlagerung mit exakt drei Rollen vor, die an Ecken eines gedachten Dreiecks angeordnet sind. Zur statisch bestimmten Führung können bei dieser Ausgestaltung der Erfindung außer der vorstehend erläuterten Führung mit zwei Rollen, die in beiden Axialrichtungen an den Rampen geführt sind, auch zwei der drei Rollen mit Führkränzen auf einer Seite der Rampen, auf denen sie wälzen, und die dritte Rolle mit einem Führkranz auf der anderen Seite der Rampe, auf der sie wälzt geführt sein.

Anspruch 10 sieht eine Rollenhalterung vor, die die Rollen lagesicher hält, damit sie nicht durch in beliebiger Richtung auf sie einwirkende Kräfte aus Ihrer Einbaulage entfernbar sind. Da die Rollen den Reibbremsbelag führen, kann eine Querkraft achsparallel und mit Abstand von den Drehachsen an den Rollen angreifen. Eine solche Querkraft bewirkt ein Kippmoment auf die Rollen. Die erfindungsgemäße Rollenhalterung verhindert, dass beispielsweise ein solches Kippmoment die Rolle aus ihrer vorgesehenen Lage bewegen kann.

### Zeichnung

Die Erfindung wird nachfolgend anhand eines in der Zeichnung dargestellten Ausführungsbeispiels näher erläutert. Es zeigen:
- Figur 1: eine perspektivische Teildarstellung einer erfindungsgemäßen Reibungsbremse;
- Figur 2: eine Rückseite einer Trägerplatte eines Reibbremsbelags der Reibungsbremse aus Figur 1 in perspektivischer Darstellung;
- Figur 3: eine Wälzlagerung einer Rolle der Reibungsbremse aus Figur 1 im Achsschnitt;
- Figur 4: eine abgewandelte Rolle in einer Figur 3 entsprechenden Darstellung; und
- Figur 5: eine Rückseite einer gegenüber Figur 2 abgewandelten Trägerplatte eines Reibbremsbelags der Reibungsbremse aus Figur 1 in perspektivischer Darstellung.
Insbesondere Figuren 1,2 und 5 sind der klaren Darstellung wegen vereinfacht.

### Beschreibung des Ausführungsbeispiels

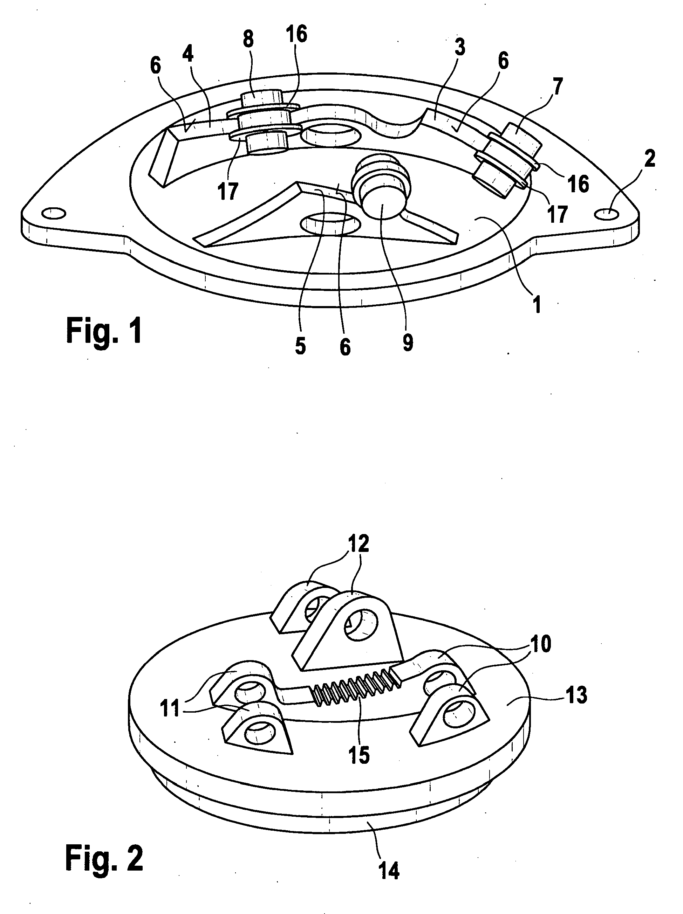

Die erfindungsgemäße selbst verstärkende Reibungsbremse ist als Teilbelag-Scheibenbremse mit elektromechanischer Betätigung ausgeführt. Sie weist einen sog. Rahmensattel auf, von dem eine Rahmenplatte 1 in Figur 1 dargestellt ist. Eine zweite, nicht dargestellte Rahmenplatte ist parallel zur dargestellten Rahmenplatte 1 angeordnet, die beiden Rahmenplatten sind durch nicht dargestellte Zuganker starr miteinander verbunden, die durch Löcher 2 mit den Rahmenplatten 1 verschraubt sind. Zwischen den beiden Rahmenplatten 1 befindet sich die ebenfalls nicht dargestellte Bremsscheibe. An einer der dargestellten Rahmenplatte 1 zugewandten Innenseite der nicht dargestellten Rahmenplatte ist ein Reibbremsbelag unbeweglich angeordnet. Der Aufbau von Bremssätteln für Scheibenbremsen, auch von Rahmensätteln, ist dem Fachmann bekannt und braucht deswegen hier nicht näher erläutert zu werden.

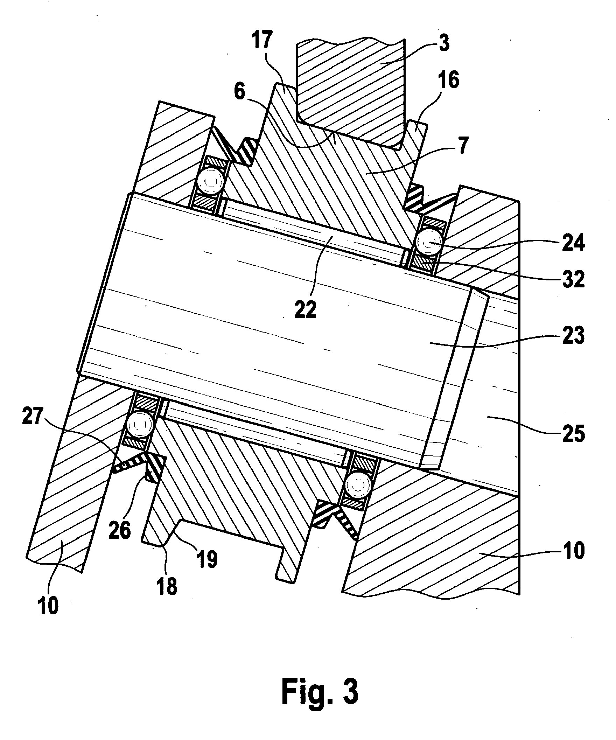

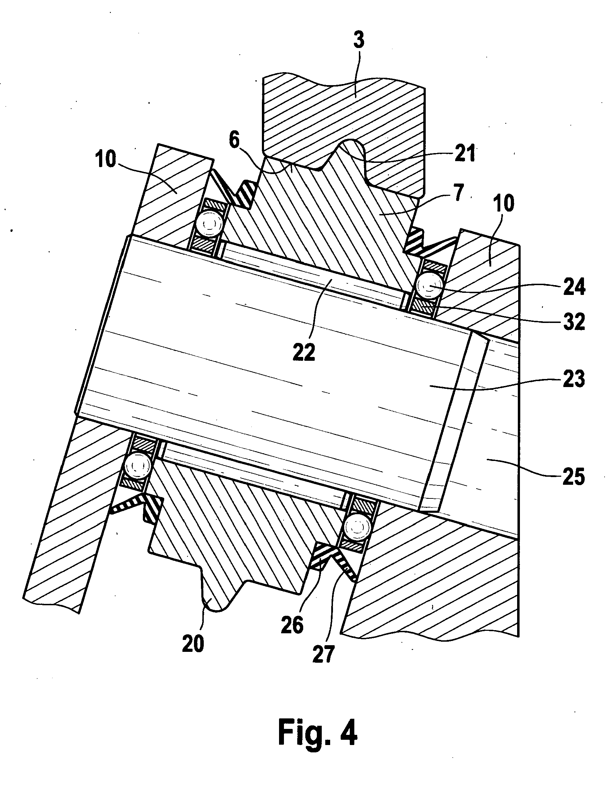

Die Rahmenplatte 1 des Rahmensattels der erfindungsgemäßen Teilbelag-Scheibenbremse weist auf ihrer in Figur 1 nach oben weisenden, der nicht dargestellten Bremsscheibe zugewandten Innenseite drei Rampen 3, 4, 5 auf, die als von der Rahmenplatte 1 in Richtung der nicht dargestellten Bremsscheibe abstehende Rippen ausgebildet sind. Die Rampen 3, 4, 5 verlaufen kreisbogenförmig um eine gedachte Drehachse der Bremsscheibe. Der nicht dargestellten Bremsscheibe zugewandte Ränder der Rampen 3, 4, 5 bilden Laufflächen, die in einer Umfangsrichtung der nicht dargestellten Bremsscheibe mit einem Rampenwinkel ansteigen, d. h. die Laufflächen 6 der Rampen 3, 4, 5 verlaufen schraubenlinienförmig zur Drehachse der Bremsscheibe. Außerdem weisen die Laufflächen 6 der Rampen 3, 4, 5, wie besser in Figuren 3 und 4 zu sehen ist eine Querneigung auf, wobei die Querneigung der Laufflächen 6 radial äußerer Rampen 3, 4 einer Querneigung einer radial inneren Rampe 5 entgegen gerichtet schräg sind.

Auf den Laufflächen 6 der Rampen 3, 4, 5 wälzen Rollen 7, 8, 9. Die Rollen 7, 8, 9 sind in Lagerbockpaaren 10, 11, 12 drehbar gelagert. Die Lagerbockpaare 10, 11, 12 befinden sich auf einer Rückseite einer Belagträgerplatte 13, die mit ihrer Rückseite nach oben in Figur 2 dargestellt ist. Auf ihrer in Figur 2 unten befindlichen Vorderseite weist die Belagträgerplatte 13 einen Reibbremsbelag 14 auf. In zusammengebautem Zustand ist die den Reibbremsbelag 14 aufweisende Vorderseite der Belagträgerplatte 13 der nicht dargestellten Bremsscheibe zugewandt, die Rückseite mit den Lagerbockpaaren 10, 11, 12 ist der in Figur 1 oben befindlichen Innenseite der Rahmenplatte 1 des Bremssattels zugewandt. In Bezug auf die in Figur 1 dargestellte Rahmenplatte 1 ist die in Figur 2 dargestellte Belagträgerplatte 13 umgeklappt, nämlich wie gesagt mit ihrer der Rahmenplatte 1 zugewandten Rückseite oben dargestellt.

Über die Rollen 7, 8, 9 stützt sich die Belagträgerplatte 13 an den Rampen 3, 4, 5 der Rahmenplatte 1 ab. Durch den schraubenlinienförmigen Verlauf der Laufflächen 6 der Rampen 3, 4, 5 ist die Belagträgerplatte 13 mit dem Reibbremsbelag 14 auf einer schraubenlinienförmigen Bahn um die Drehachse der nicht dargestellten Bremsscheibe verschiebbar geführt, die Rollen 7, 8, 9 bilden eine Wälzlagerung zur Verschiebung der Belagträgerplatte 13. Die drei Rollen 7, 8, 9 sind an Ecken eines gedachten Dreiecks angeordnet, die Belagträgerplatte 13 ist dadurch an drei Stellen und statisch bestimmt abgestützt.

Zwei der Rollen 7, 8 mit großem Abstand in Umfangsrichtung voneinander mit gleichem Radius von der Drehachse der nicht dargestellten Bremsscheibe angeordnet. Die dritte Rolle 9 ist in Umfangsrichtung etwa in einer Mitte zwischen den beiden anderen Rollen 7, 8 sind und mit einem anderen Radius von der Drehachse der Bremsscheibe angeordnet. Im dargestellten Ausführungsbeispiel der Erfindung weist die in Umfangsrichtung zwischen den beiden anderen Rollen 7, 8 angeordnete Rolle 9 einen kleineren Radius von der Drehachse der Bremsscheibe auf.

Zum Antrieb weist die Belagträgerplatte 13 eine Zahnstange 15 auf, die ebenfalls schraubenlinienförmig um die Drehachse der nicht dargestellten Bremsscheibe verläuft. Der Antrieb erfolgt elektromechanisch mit einer nicht dargestellten Betätigungseinrichtung, die einen Elektromotor, ein Zahnradgetriebe als Untersetzungsgetriebe und ein mit der Zahnstange 15 kämmendes Zahnrad aufweist. Derartige Betätigungseinrichtungen sind dem Fachmann geläufig und brauchen deswegen an dieser Stelle nicht näher erläutert werden.

Zur Betätigung der Scheibenbremse wird die Belagträgerplatte 13 mit dem Reibbremsbelag 14 durch Antrieb an der Zahnstange 15 mit der nicht dargestellten elektromechanischen Betätigungseinrichtung entlang der schraubenlinienförmig verlaufenden Rampen 3, 4, 5, d. h. schraubenlinienförmig zur Drehachse der nicht dargestellten Bremsscheibe verschoben. Durch die schraubenlinienförmige Verschiebung bewegt sich die Belagträgerplatte 13 in Umfangsrichtung und quer zur nicht dargestellten Bremsscheibe, so dass der Reibbremsbelag 14 in Anlage an die Bremsscheibe kommt. Die Verschieberichtung der Belagträgerplatte 13 entspricht einer Drehrichtung der Bremsscheibe. Die Bremsscheibe wird durch Reibung zwischen ihr und dem Reibbremsbelag 14 gebremst. Dabei übt die drehende Bremsscheibe eine Reibungskraft auf den Reibbremsbelag 14 aus, die den Reibbremsbelag 14 und mit ihm die Belagträgerplatte 13 in Richtung der ansteigenden Rampen 3, 4, 5 beaufschlagt. Die Beaufschlagung der Belagträgerplatte 13 erfolgt also in Richtung eines enger werdenden Zwischenraums zwischen den Rampen 3, 4, 5 und der nicht dargestellten, zur Sattelplatte 1 parallelen Bremsscheibe. Der enger werdende Zwischenraum zwischen den Rampen 3, 4, 5 und der Bremsscheibe kann auch als enger werdender Keilspalt angesehen werden. Die Rampen 3, 4, 5 stützen die Belagträgerplatte 13 ab, wobei eine Abstützkraft eine Kraftkomponente quer zur Bremsscheibe aufweist, die den Reibbremsbelag 14 gegen die Bremsscheibe drückt. Die Rampen 3, 4, 5, die auch als Rampenmechanismus bezeichnet werden können, bewirken auf diese Weise eine Erhöhung der Andruckkraft des Reibbremsbelags 14 gegen die Bremsscheibe und somit eine Erhöhung einer Bremskraft der Scheibenbremse, die Scheibenbremse weist eine Selbstverstärkung auf.

Soll die Scheibenbremse eine Selbstverstärkung für beide Drehrichtungen der nicht dargestellten Bremsscheibe aufweisen, sind die Rampen 3, 4, 5 als Doppelrampen mit Steigung in beiden Umfangsrichtungen auszuführen (nicht dargestellt). Weist die Bremsscheibe eine Vorzugsdrehrichtung auf, können wie im dargestellten Ausführungsbeispiel die Rampen 3, 4, 5 eine Steigung in einer Umfangsrichtung aufweisen, wodurch die Selbstverstärkung der Scheibenbremse nur in der Vorzugsdrehrichtung der Bremsscheibe wirksam ist.

Zur Führung der Belagträgerplatte 13 weisen zwei der drei Rollen 7, 8 Führkränze 16, 17 auf, wie im vergrößerten Achsschnitt in Figur 3 gut zu sehen ist. Die Führkränze 16, 17 sind nach Art von Spurkränzen von Rädern von Schienenfahrzeugen ausgebildet, sie können auch als Radialflansche aufgefasst werden. Die Führkränze 16, 17 übergreifen die Rampen 3, 4 seitlich auf beiden Seiten und führen dadurch die Rollen 7, 8 und damit die Belagträgerplatte 13 an den Rampen 3, 4. Da nur zwei der drei Rollen 7, 8 Führkränze 16, 17 aufweisen, ist die Führung statisch bestimmt. Um Querkräfte der Führung niedrig zu halten, sind die beiden Rollen 7, 8 mit Führkränzen 16, 17 ausgebildet, die in Umfangsrichtung am weitesten voneinander beabstandet sind. Die Rollen 7, 8, 9 weisen dieselbe Querneigung wie die Laufflächen 6 der Rampen 3, 4, 5 auf. Zur Anpassung an die in Bezug auf die Rollen 7, 8 schräg stehenden Rampen 3, 4 ist eine umlaufende innere Kante eines Führkranzes 17 gerundet (bei Bezugszahl 18) und die Innenflanke 19 ist kegelförmig einer Seitenfläche der Rampe 3, 4 angepasst. Die Kegelform der Innenflanke 19 und die Rundung der umlaufenden Kante 18 ist an dem Führkranz 17 vorgesehen, an dessen Seite die Lauffläche 6 mit der Seite der Rampe 3, 4 einen stumpfen Winkel bildet.

Eine statisch bestimmte Führung der Belagträgerplatte 13 ist auch mit nur einem Führkranz an jeder der drei Rollen 7, 8, 9 möglich (nicht dargestellt). In diesem Fall sind die Führkränze entweder jeweils an den einander zugewandten Innenseiten der Rampen 3, 4, 5 oder an den einander abgewandten Außenseiten der Rampen 3, 4, 5 angeordnet.

Eine weitere Führungsmöglichkeit zeigt Figur 4. Dort ist der Führkranz 20 in der Mitte der in Umfangsrichtung am weitesten voneinander beabstandeten Rollen 7, 8 vorgesehen und greift in eine Nut 21 in der Lauffläche 6 der Rippen 3, 4 ein.

Die Rollen 7, 8, 9 sind wie in Figuren 3 und 4 dargestellt mit einem Nadellager 22 auf einem Bolzen 23 radial gelagert und mit Kugellagern 24 axial gelagert. Die Kugellager 24 sind zwischen Stirnseiten der Rollen 7, 8, 9 und einander zugewandten Innenflächen der Lagerbockpaare 10, 11, 12 angeordnet. Der Bolzen 23 ist in fluchtende Bohrungen 25 in den Lagerbockpaaren 10, 11, 12 eingepresst. Dichtringe 26, die auf einem Bund der Rollen 7, 8, 9 aufgesetzt sind und deren Dichtlippen 27 an den einander zugewandten Innenseiten der Lagerbockpaare 10, 11, 12 anliegen, dichten die Lager 22, 24 hermetisch ab.

Das Nadellager 22 bildet ein Radiallager, die Kugellager 24 bilden Axiallager. Die Lager 22, 24 sind lagerringlos, d. h. sie weisen keinen Innenring und keinen Außenring bzw. die Axiallager 24 keine nebeneinander angeordneten Lagerringe auf, zwischen denen die Wälzkörper wälzen. Die Nadeln des Nadellagers 22 wälzen unmittelbar auf dem die Welle der Rollen 7, 8, 9 bildenden Bolzen 23 und in einem Axialloch der Rollen 7, 8, 9. Die Kugeln der Kugellager 24 wälzen unmittelbar an Stirnflächen der Rollen 7, 8, 9 und an diesen zugewandten Innenflächen der Lagerbockpaare 10, 11, 12. Die Drehlagerungen der Rollen 7, 8, 9 sind reibungsarm, weisen weniger Teile als Lagerungen mit Lagerringen und zudem kostengünstigere, weil einfacher herstellbare Teile auf. Mit 32 sind in Figuren 3 und 4 Kugelkäfige bezeichnet, die die Kugeln der Kugellager 24 in ihrem Abstand voneinander halten. Es sind keine Lagerringe, auf denen die Kugeln wälzen.

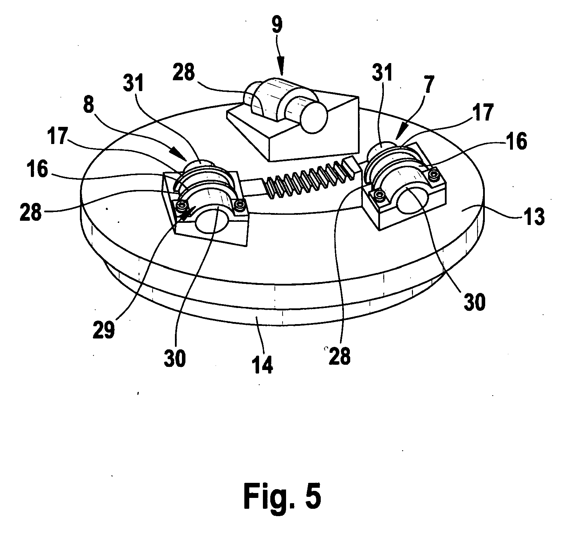

Zur Erläuterung der in Figur 5 dargestellten, gegenüber Figur 2 abgewandelten Belagträgerplatte 13 werden für mit Figuren 1 und 2 übereinstimmende Bauteile gleiche Bezugszahlen verwendet. Die in Figur 5 dargestellte Belagträgerplatte 13 wirkt anstelle der in Figur 2 dargestellten Belagträgerplatte 13 in vorstehend erläuterter Weise mit der in Figur 1 dargestellten Rahmenplatte 1 des Rahmensattels der erfindungsgemäßen Teilbelag-Scheibenbremse zusammen.

In Figur 5 sind die in Figur 1 gezeigten Rollen 7, 8, 9 noch einmal dargestellt. Sie liegen drehbar in halbzylinderförmigen, durchmessergestuften Taschen 28 ein, die in der dem Reibbremsbelag 14 abgewandten Rückseite der Belagträgerplatte 13 angebracht sind. Die Rolle 9, die keinen Führkranz aufweist, liegt lose in ihrer Tasche 28 ein, sie wird bei zusammengebautem Rahmensattel von der Rampe 5, auf der sie wälzt, in der Tasche 28 gehalten. Die beiden anderen Rollen 7, 8, die die Führkränze 16, 17 aufweisen, sind mit Rollenhalterungen 29 gesichert, d. h. in ihren Taschen 28 gehalten. Die Rollenhalterungen 29 weisen Bügel 30 auf, die Wellen 31 der Rollen 7, 8 übergreifen. Die Bügel 30 sind mit der Belagträgerplatte 13 verschraubt. Die die Rollenhalterungen 29 bildenden Bügel 30 halten die Rollen 7, 8 in den Taschen 28 und infolgedessen lagesicher in bzw. an der Belagträgerplatte 13. Im dargestellten Ausführungsbeispiel sind die Bügel 29 auf jeweils nur einer Seite der Rollen 7, 8 vorgesehen. Grundsätzlich können solche Bügel 30 auch auf beiden Seiten der Rollen 7, 8 vorgesehen sein.

Da die Führkränze 16, 17 die Rollen 7, 8 seitlich an den Rampen 3, 4 der Rahmenplatte 1 führen, können Querkräfte achsparallel zu den Rollen 7, 8 und in einem dem Radius der Führkränze 16, 17 entsprechenden Achsabstand an den Führkränzen 16, 17 der Rollen 7, 8 angreifen. Diese Querkräfte bewirken ein Kippmoment auf die Rollen 7, 8. Die Rollenhalterungen 29 mit den Bügeln 30 verhindern, dass ein solches Kippmoment die Rollen 7, 8 aus den Taschen 28 heraus bewegt.

Die Rollen 7, 8, 9 können wie in Figuren 3 und 4 dargestellt auf den Wellen 31 drehbar gelagert sein. Die Wellen 31 werden dabei von den in Figuren 3 und 4 dargestellten Bolzen 23 gebildet. Grundsätzlich können auch die Wellen 31 in den Taschen 28 und den Bügeln 30 drehbar gleit- oder wälzgelagert sein (nicht dargestellt).

## Patentansprüche

1. Selbstverstärkende Reibungsbremse, mit einem Reibbremsbelag (14), der in einer Drehrichtung und in Anlage an einen Bremskörper bewegbar ist, mit einer Betätigungseinrichtung, mit der der Reibbremsbelag (14) zum Bremsen an den Bremskörper drückbar ist, und mit einem Rampenmechanismus (3 - 12), der den Reibbremsbelag (14) unter einem Rampenwinkel zum Bremskörper abstützt, wobei der Rampenmechanismus (3 - 12) eine Wälzlagerung aufweist, mit der der Reibbremsbelag (14) im Rampenwinkel zum Bremskörper bewegbar gelagert ist und wobei die Wälzlagerung Rollen (7, 8, 9) aufweist, die auf Rampen (3, 4, 5) des Rampenmechanismus (3 - 12) wälzen, **dadurch gekennzeichnet, dass** mindestens eine Rolle (7, 8) des Rampen-mechanismus (3 - 12) einen Führkranz (16, 17; 20) aufweist, der radial nach außen von einer Lauffläche der Rolle absteht und der die Rolle (7, 8) an der Rampe (3, 4), auf der die Rolle (7, 8) wälzt, führt.

2. Selbstverstärkende Reibungsbremse nach Anspruch 1, **dadurch gekennzeichnet, dass** mindestens eine Rolle (7, 8) Führkränze (16, 17) aufweist, die die Rolle an beiden Seiten der Rampe (3, 4), auf der die Rolle (7, 8) wälzt, führt.

3. Selbstverstärkende Reibungsbremse nach Anspruch 1, **dadurch gekennzeichnet, dass** der Führkranz (20) der Rolle (7, 8) in einer Nut (21) der Rampe (3, 4) geführt ist.

4. Selbstverstärkende Reibungsbremse nach Anspruch 1, **dadurch gekennzeichnet, dass** genau zwei in Umfangsrichtung des Bremskörpers beabstandete Rollen (7, 8) der Wälzlagerung eine Führkranzführung an den Rampen (3, 4), auf denen sie wälzen, in beiden Axialrichtungen der beiden Rollen (7, 8) aufweisen.

5. Selbstverstärkende Reibungsbremse nach Anspruch 1, **dadurch gekennzeichnet, dass** zwei Rollen der Wälzlagerung eine Führkranzführung an den Rampen, auf denen sie wälzen, in entgegen gesetzten Axialrichtungen der beiden Rollen aufweisen.

6. Selbstverstärkende Reibungsbremse nach Anspruch 1, **dadurch gekennzeichnet, dass** die Rollen (7, 8, 9) der Wälzlagerung wälzgelagert sind.

7. Selbstverstärkende Reibungsbremse nach Anspruch 6, **dadurch gekennzeichnet, dass** die Rollen (7, 8, 9) eine Abdichtung ihrer Wälzlager (22, 24) aufweisen.

8. Selbstverstärkende Reibungsbremse nach Anspruch 1, **dadurch gekennzeichnet, dass** die Wälzlagerung exakt drei Rollen (7, 8, 9) aufweist, die an Ecken eines gedachten Dreiecks angeordnet sind.

9. Selbstverstärkende Reibungsbremse nach Anspruch 1, **dadurch gekennzeichnet, dass** die Reibungsbremse als elektromechanische Teilbelag-Scheibenbremse ausgebildet ist.

10. Selbstverstärkende Reibungsbremse nach Anspruch 1, **dadurch gekennzeichnet, dass** die Reibungsbremse eine Rollenhalterung (29) aufweist, die die Rollen (7, 8) lagesicher hält.

11. Selbstverstärkende Reibungsbremse nach Anspruch 10, **dadurch gekennzeichnet, dass** die Rollenhalterung (29) einen Bügel (30) aufweist, der eine Welle (31) der Rollen (7, 8) übergreift und in einer Wellenaufnahme (28) hält.

12. Selbstverstärkende Reibungsbremse nach Anspruch 1, **dadurch gekennzeichnet, dass** die Rollen (7. 8, 9) eine Axial- und/oder eine Radialwälzlagerung aufweisen.

13. Selbstverstärkende Reibungsbremse nach Anspruch 12, **dadurch gekennzeichnet, dass** die Wälzlagerung (22, 24) lagerringlos ist.

## Claims

1. Self-energizing friction brake, having a friction brake pad (14) which can be moved in a direction of rotation and into contact with a brake body, having an actuating device by means of which the friction brake pad (14) can be pressed against the brake body for braking, and having a ramp mechanism (3 - 12) which supports the friction brake pad (14) at a ramp angle with respect to the brake body, wherein the ramp mechanism (3 - 12) has a rolling bearing arrangement by means of which the friction brake pad (14) is mounted so as to be movable at the ramp angle with respect to the brake body, and wherein the rolling bearing arrangement has rollers (7, 8, 9) which roll on ramps (3, 4, 5) of the ramp mechanism (3 - 12), **characterized in that** at least one roller (7, 8) of the ramp mechanism (3 - 12) has a guide ring (16, 17; 20) which projects radially outwards from a running surface of the roller and which guides the roller (7, 8) on the ramp (3, 4) on which the roller (7, 8) rolls.

2. Self-energizing friction brake according to Claim 1, **characterized in that** at least one roller (7, 8) has guide rings (16, 17) which guide the roller on both sides of the ramp (3, 4) on which the roller (7, 8) rolls.

3. Self-energizing friction brake according to Claim 1, **characterized in that** the guide ring (20) of the roller (7, 8) is guided in a groove (21) of the ramp (3, 4).

4. Self-energizing friction brake according to Claim 1, **characterized in that** precisely two rollers (7, 8), which are spaced apart in the circumferential direction of the brake body, of the rolling bearing arrangement are guided on the ramps (3, 4), on which they roll, by guide rings in both axial directions of the two rollers (7, 8).

5. Self-energizing friction brake according to Claim 1, **characterized in that** two rollers of the rolling bearing arrangement are guided on the ramps, on which they roll, by guide rings in opposite axial directions of the two rollers.

6. Self-energizing friction brake according to Claim 1, **characterized in that** the rollers (7, 8, 9) of the rolling bearing arrangement are mounted by means of rolling bearings.

7. Self-energizing friction brake according to Claim 6, **characterized in that** the rollers (7, 8, 9) have sealing of their rolling bearings (22, 24).

8. Self-energizing friction brake according to Claim 1, **characterized in that** the rolling bearing arrangement has precisely three rollers (7, 8, 9) arranged at corners of an imaginary triangle.

9. Self-energizing friction brake according to Claim 1, **characterized in that** the friction brake is designed as an electromechanical spot-type disc brake.

10. Self-energizing friction brake according to Claim 1, **characterized in that** the friction brake has a roller retainer (29) which holds the rollers (7, 8) securely in position.

11. Self-energizing friction brake according to Claim 10, **characterized in that** the roller retainer (29) has a bracket (30) which engages over a shaft (31) of the rollers (7, 8) and holds said shaft in a shaft receptacle (28).

12. Self-energizing friction brake according to Claim 1, **characterized in that** the rollers (7, 8, 9) have an axial and/or a radial rolling bearing arrangement.

13. Self-energizing friction brake according to Claim 12, **characterized in that** the rolling bearing arrangement (22, 24) has no bearing rings.

## Revendications

1. Frein à friction auto-amplificateur, comprenant une garniture de frein à friction (14) qui peut être déplacée dans un sens de rotation et en appui contre un corps de frein, un système d'actionnement, avec lequel la garniture de frein à friction (14) peut être pressée contre le corps de frein pour le freinage, et un mécanisme de rampe (3 - 12) , qui supporte la garniture de frein à friction (14) suivant un angle de rampe par rapport au corps de frein, le mécanisme de rampe (3 - 12) présentant un support sur palier à roulement, avec lequel la garniture de frein à friction (14) est montée de manière déplaçable par rapport au corps de rampe suivant l'angle de rampe, le support sur palier à roulement présentant des rouleaux (7, 8, 9) qui roulent sur les rampes (3, 4, 5) du mécanisme de rampe (3 - 12), **caractérisé en ce qu'**au moins un rouleau (7, 8) du mécanisme de rampe (3 - 12) présente une couronne de guidage (16, 17 ; 20) qui fait saillie radialement vers l'extérieur depuis une surface de roulement du rouleau et qui guide le rouleau (7, 8) sur la rampe (3, 4) sur laquelle roule le rouleau (7, 8).

2. Frein à friction auto-amplificateur selon la revendication 1, **caractérisé en ce qu'**au moins un rouleau (7, 8) présente des couronnes de guidage (16, 17) qui conduisent le rouleau sur les deux côtés de la rampe (3, 4) sur laquelle roule le rouleau (7, 8).

3. Frein à friction auto-amplificateur selon la revendication 1, **caractérisé en ce que** la couronne de guidage (20) du rouleau (7, 8) est guidée dans une rainure (21) de la rampe (3, 4).

4. Frein à friction auto-amplificateur selon la revendication 1, **caractérisé en ce que** précisément deux rouleaux (7, 8) du support sur palier à roulement espacés dans la direction périphérique du corps de frein présentent un guidage de couronne de guidage sur les rampes (3, 4) sur lesquelles ils roulent, dans les deux directions axiales des deux rouleaux (7, 8).

5. Frein à friction auto-amplificateur selon la revendication 1, **caractérisé en ce que** deux rouleaux du support sur palier à roulement présentent un guidage de couronne de guidage sur les rampes sur lesquelles ils roulent, dans des directions axiales opposées des deux rouleaux.

6. Frein à friction auto-amplificateur selon la revendication 1, **caractérisé en ce que** les rouleaux (7, 8, 9) du support sur palier à roulement sont supportés à roulement.

7. Frein à friction auto-amplificateur selon la revendication 6, **caractérisé en ce que** les rouleaux (7, 8, 9) présentent une garniture d'étanchéité de leurs paliers à roulement (22, 24).

8. Frein à friction auto-amplificateur selon la revendication 1, **caractérisé en ce que** le support sur palier à roulement présente exactement trois rouleaux (7, 8, 9) qui sont disposés sur des coins d'un triangle imaginaire.

9. Frein à friction auto-amplificateur selon la revendication 1, **caractérisé en ce que** le frein à friction est réalisé sous forme de frein à disques à garniture partielle électromécanique.

10. Frein à friction auto-amplificateur selon la revendication 1, **caractérisé en ce que** le frein à friction présente un support de rouleau (29) qui retient de manière sûre en position les rouleaux (7, 8) .

11. Frein à friction auto-amplificateur selon la revendication 10, **caractérisé en ce que** le support de rouleau (29) présente un étrier (30) qui vient en prise par le dessus avec un axe (31) des rouleaux (7, 8) et qui le retient dans un logement d'axe (28).

12. Frein à friction auto-amplificateur selon la revendication 1, **caractérisé en ce que** les rouleaux (7, 8, 9) présentent un support sur palier à roulement axial et/ou radial.

13. Frein à friction auto-amplificateur selon la revendication 12, **caractérisé en ce que** le support sur palier à roulement (22, 24) est exempt de bague de palier.
